# DEMANDE DE BREVET EUROPEEN

(11) **EP 4 811 005 A1**
(43) Date de publication de la demande: **23.09.2026**
(21) Numéro de dépôt: 26164926.3
(22) Date de dépôt: 16.03.2026
(51) Int. Cl.: G01T 1/29, G01T 1/36

(54) **METHODE D'IDENTIFICATION DE RAYONNEMENTS IONISANTS PAR IMAGERIE HYPERSPECTRALE**

(30) Priorité: 17.03.2025 FR 2502659
(71) Demandeur: Commissariat à l'Energie Atomique et aux Energies Alternatives, 75015 Paris (FR)
(72) Inventeur: AMOYAL, Guillaume, 91191 GIF SUR YVETTE CEDEX (FR); GENDRE, Quentin, 91191 GIF SUR YVETTE CEDEX (FR); STOLIDI, Adrien, 91191 GIF SUR YVETTE CEDEX (FR); VAZZOLER, Aurore, 91191 GIF SUR YVETTE CEDEX (FR)
(74) Mandataire: Atout PI Laplace

(57) **Abrégé**

Méthode d'identification de rayonnements ionisants comprenant les étapes de :
- Recevoir (601) un ensemble de données acquises par un dispositif spectro-imageur pour une scène donnée, comprenant, pour chaque interaction d'un rayonnement mesurée par le dispositif spectro-imageur, la position de l'interaction et son énergie déposée,
- Construire (602), à partir dudit ensemble de données, un hypercube à deux dimensions spatiales et une dimension correspondant à l'énergie du rayonnement mesuré,
- Recevoir (603) plusieurs spectres de référence en énergie associés chacun à un type de rayonnement de référence et,
- Pour chaque spectre de référence, déterminer (604,605) au moins une position dans l'hypercube dont le spectre en énergie est le plus proche du spectre de référence selon un critère de similarité prédéfini.

## Description

L'invention concerne le domaine de la détection et localisation de rayonnements ionisants dans une zone donnée, notamment les rayonnements X et gamma. Les rayonnements ionisants peuvent être émis par des sources radioactives que l'on souhaite localiser et identifier ou bien par des éléments chimiques qui sont au préalable irradiés par un rayonnement ionisant (par exemple un faisceau de rayons X) et qui émettent en réponse un rayonnement de fluorescence X.

L'invention porte sur une méthode d'identification de rayonnements ionisants par imagerie hyperspectrale consistant à produire une cartographie 2D d'une zone dans laquelle les rayonnements issus de radionucléides ou d'éléments chimiques sont localisés et identifiés.

L'invention trouve notamment application dans l'industrie nucléaire, le domaine médical et l'astrophysique pour des opérations de démantèlement, assainissements, de radioprotection ou encore de sécurité. Elle s'applique également au domaine de la fabrication additive, au tri et recyclage de déchets électroniques ou au domaine de la métallurgie.

Un problème général à résoudre dans le domaine de l'identification de rayonnements ionisants consiste à pouvoir détecter, localiser et identifier plusieurs sources émettrices de rayonnements, présentes simultanément, en particulier lorsque ces sources émettent dans des bandes d'énergie identiques.

Par exemple, dans l'industrie nucléaire ou les chantiers de démantèlement et assainissement, plusieurs radionucléides peuvent être présents simultanément dans une même scène. Il est important de pouvoir les distinguer et les localiser précisément.

Un autre exemple concerne le tri de déchets d'équipements électriques et électroniques et notamment le tri et le recyclage de métaux critiques contenus dans ces équipements. La production de ces équipements nécessite l'utilisation de nombreux métaux dits critiques comme des terres rares dont l'exploitation est au cœur de nombreux enjeux tant sur le plan environnemental, que stratégique et économique. Il est donc important de pouvoir recycler ces métaux afin de réduire l'impact environnemental de leur extraction. Cependant, la disparité de concentration de ces éléments dans les appareils électroniques rend complexe la mise en œuvre de méthodes de tri.

Dans ce contexte, un problème consiste à pouvoir identifier certains éléments chimiques d'intérêts dans des composants.

Un autre exemple concerne la surveillance d'un procédé de fabrication additive métallique. Plusieurs techniques existent, classées par catégorie comme la fusion sur lit de poudre (PBF - *Powder Bed Fusion*), la projection de liant (BJ - *Binder Jetting*), l'extrusion de métal (*Metal* MEX - *Metal Material Extrusion*) et le dépôt d'énergie dirigée (DED - *Directed Energy Deposition*). Pour cette dernière catégorie la technique de I fabrication additive par arc électrique (WAAM - *Wire Arc Additive Manufacturing*) est une technologie d'impression 3D émergente qui utilise un arc électrique pour faire fondre un fil métallique et le déposer couche par couche afin de créer des pièces complexes. Cette méthode offre plusieurs avantages comme la possibilité de produire des composants métalliques de design spécifique à grande échelle, dans des délais et à des coûts réduits. En outre, cette technologie permet d'utiliser une large gamme de matériaux, notamment des alliages base aluminium, base acier ou base titane, ce qui en fait une option polyvalente pour des secteurs tels que l'aérospatiale l'énergie.

Cependant, la fabrication additive par arc électrique est un procédé complexe qui implique de nombreux paramètres pouvant entrainer des déviations dans la qualité des pièces produites. Dans ce contexte, un risque identifié réside dans l'incapacité à contrôler la proportion des éléments chimiques dans un alliage ce qui peut entrainer une déviation dans les propriétés mécaniques de la pièce ou une déviation de la composition de l'alliage par rapport aux normes attendues.

Ainsi, dans ce contexte, un problème technique à résoudre consiste également à identifier chaque élément chimique dont est composé une pièce en cours de fabrication.

Dans le domaine de l'identification de rayonnements ionisants, en particulier dans le domaine nucléaire, l'imagerie à masque codé des rayonnements ionisants est une technique de localisation qui repose sur la modulation spatiale ou temporelle d'un flux de photons X ou gamma incident.

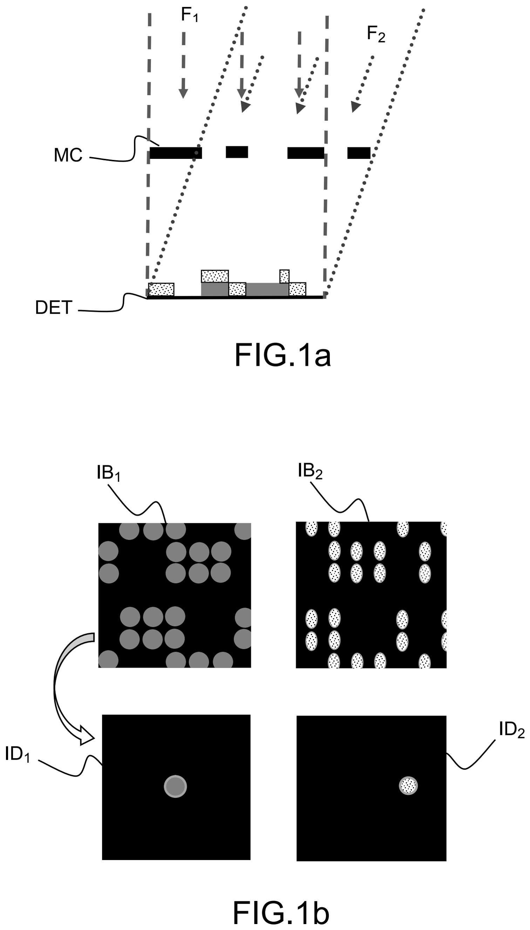

Un masque codé est un élément avec une densité suffisamment élevée pour atténuer les photons incidents et présentant un arrangement de trous et de pleins formant un motif spécifique. Une illustration de cette technique est décrite dans la référence [1] et sur les figures 1a et 1b. Le masque codé MC est positionné entre la source radioactive F₁, F₂ et le détecteur DET. Les photons incidents passent au travers des trous et sont « arrêtés » par les pleins du masque, projetant ainsi l'ombre du motif du masque codé MC sur le détecteur DET. En fonction de la position de la source radioactive F₁, F₂, l'ombre projetée sera différente. En connaissant le motif du masque codé et en appliquant un algorithme adapté, la position de la source radioactive peut être reconstruite. Les prérequis pour pouvoir réaliser de l'imagerie à masque codé sont donc un masque codé MC avec un motif maîtrisé, associé à un détecteur DET capable de fournir les positions d'interactions dans son volume sensible. Ces détecteurs sont appelés des détecteurs pixellisés. A titre d'exemple, un détecteur pixellisé peut consister en un circuit ASIC couplé à un semi-conducteur : on parle de détecteur hybride pixellisé ou d'une association d'une matrice de photomultiplicateurs de type SiPM (silicon photomultiplier) couplée à un scintillateur. D'autres types de détecteurs ou une combinaison de plusieurs détecteurs peuvent également être envisagés. De manière générale, tout détecteur composé de pixels et apte à réaliser une mesure en énergie d'un rayonnement ionisant est compatible de l'invention.

Sur les figures 1a et 1b sont représentées à titre d'exemple, les images brutes IB₁, IB₂ obtenues par un détecteur DET couplé à un masque codé MC pour deux sources F₁, F₂ ayant deux positions et orientations différentes par rapport au masque codé. Sur la figure 1b, on a aussi représenté les images décodées ID₁, ID₂ obtenues par décodage des images brutes connaissant le motif du masque codé MC.

On peut voir que selon la position de la source rayonnante, l'image brute est différente et dépend de la projection du flux sur le détecteur à travers le masque codé. Il est donc possible de décoder ces images pour obtenir une image comprenant la localisation de la source.

La spectro-imagerie à masque codé des rayonnements ionisants repose sur un principe analogue à celui décrit ci-dessus en y intégrant une information spectrométrique supplémentaire. Le principe de cette approche consiste à sélectionner les interactions selon un critère discriminant reposant sur l'énergie déposée. Cette technique nécessite donc l'utilisation d'un détecteur capable de mesurer simultanément les positions d'interactions ainsi que l'énergie déposée. La référence [2] décrit une méthode de spectro-imagerie dont le principe repose sur un critère en énergie consistant à sélectionner les interactions contribuant à un pic d'absorption totale associé à un radionucléide donné. Dans cet article sont présentées les localisations par spectro-imagerie à masque codé d'une source de ²⁴¹Am et d'une source de ¹³³Ba. La localisation de l'¹²⁴Am est obtenue en sélectionnant les photons gamma déposant une énergie autour de 59,5 keV. La position du ¹³³Ba, quant à elle, est reconstruite en sélectionnant les interactions déposant des énergies à 81 keV, 303 keV et 356 keV.

Un inconvénient de cette approche est atteint lorsque le pic d'absorption totale du radionucléide considéré est noyé dans un continuum Compton, ou encore que le pic d'énergie d'intérêt est confondu avec un autre pic en énergie induit par un ou plusieurs radionucléides différents.

Afin d'illustrer cette limitation, une série de mesure a été réalisée en conditions de laboratoire. La première mesure, appelée M1, est la suivante : un spectro-imageur gamma est positionné à une distance d'un mètre d'une source de ¹³⁷Cs d'activité 33 MBq pendant une heure. Une deuxième mesure, appelée M2, est ensuite réalisée avec le même dispositif expérimental mais en positionnant une source de ⁶⁰Co d'activité 24 MBq. Dans un troisième temps, les deux sources radioactives sont positionnées simultanément à leur position respective, fournissant la mesure M3.

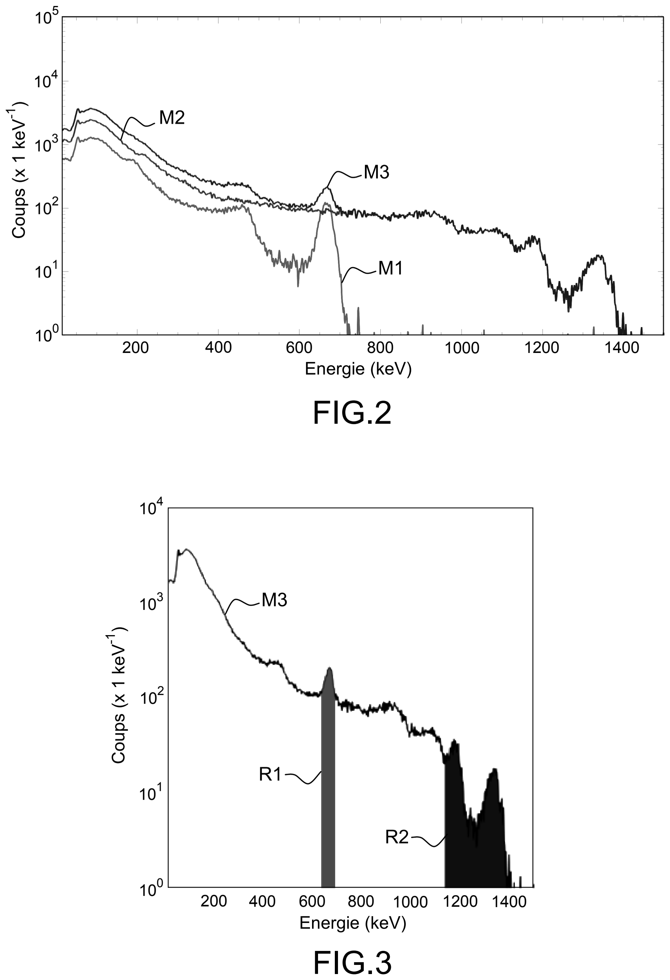

La figure 2 présente les spectres en énergie mesurés dans les différentes configurations de mesure M1, M2, M3 décrites précédemment. Sur le spectre en énergie de la mesure M1, la raie spectrale du rayonnement gamma du ¹³⁷Cs à 661,7 keV est reconstruite. Le nombre de coups dans ce pic est de 4609 +/- 55 et représente le nombre d'interactions d'intérêt pour la localisation du ¹³⁷Cs à l'aide de la technique de spectro-imagerie. Sur le spectre en énergie de la mesure M2, les raies du ⁶⁰Co à 1,17 MeV et 1,33 MeV sont reconstruites. A partir de ce spectre, la contribution du continuum Compton dans la bande d'énergie associée au ¹³⁷Cs induit par le ⁶⁰Co est estimée, elle est de l'ordre de 6632 +/- 81.

Sur le spectre en énergie de la mesure M3, pour laquelle les deux sources de ¹³⁷Cs et ⁶⁰Co sont placées simultanément dans le champ de vue de l'imageur, les pics d'absorption totale du ¹³⁷Cs et du ⁶⁰Co sont reconstruits. A partir de ce spectre en énergie, la présence de ces deux radionucléides dans la scène analysée est validée.

La figure 3 représente le spectre issu de la mesure M3 seule sur lequel les régions d'intérêts en énergie utilisées pour reconstruire la position du ¹³⁷Cs (région R1) et du ⁶⁰Co (région R2) sont identifiées.

En sélectionnant les interactions contribuant à la région d'intérêt R1, on obtient deux points chauds correspondant à la localisation de deux sources. Cela est dû au fait que la contribution du continuum Compton induit par le ⁶⁰Co dans la bande d'énergie R1 du ¹³⁷Cs est supérieure au nombre de coups induit par le ¹³⁷Cs lui-même. Par conséquent, lorsque cette région en énergie est utilisée pour reconstruire une image, les interactions utilisées pour reconstruire la scène sont issues à la fois du ¹³⁷Cs et du ⁶⁰Co. Puisque les contributions des deux radionucléides à cette bande d'énergie sont du même ordre de grandeur, lorsque les interactions contribuant à cette bande d'énergie sont sélectionnées pour reconstruire l'image, deux points chauds sont mis en valeur. Cependant, il n'est pas possible d'identifier précisément les deux sources identifiées. En particulier, un utilisateur peut conclure de façon erronée que les deux sources correspondent à du ¹³⁷Cs.

Ce problème n'apparait pas lorsqu'on considère la région d'intérêt R2 qui est propre au ⁶⁰Co. En effet, il n'y a pas d'autres émetteurs gamma de plus haute énergie qui viendrait générer un continuum Compton de même niveau que le nombre de coups induits par le ⁶⁰Co dans cette bande d'énergie R2.

Ainsi, la méthode de spectro-imagerie décrite ci-dessus présente l'inconvénient de ne pas permettre la caractérisation précise sans ambiguïté des sources de rayonnements lorsque plusieurs sources sont présentes simultanément et génèrent une activité importante dans des bandes d'énergie identiques.

Le même type d'inconvénient existe dans le cas d'une méthode de spectro-imagerie par fluorescence X pour identifier les éléments chimiques d'un échantillon. Tout d'abord, deux approches de spectro-imagerie par fluorescence X peuvent être envisagées.

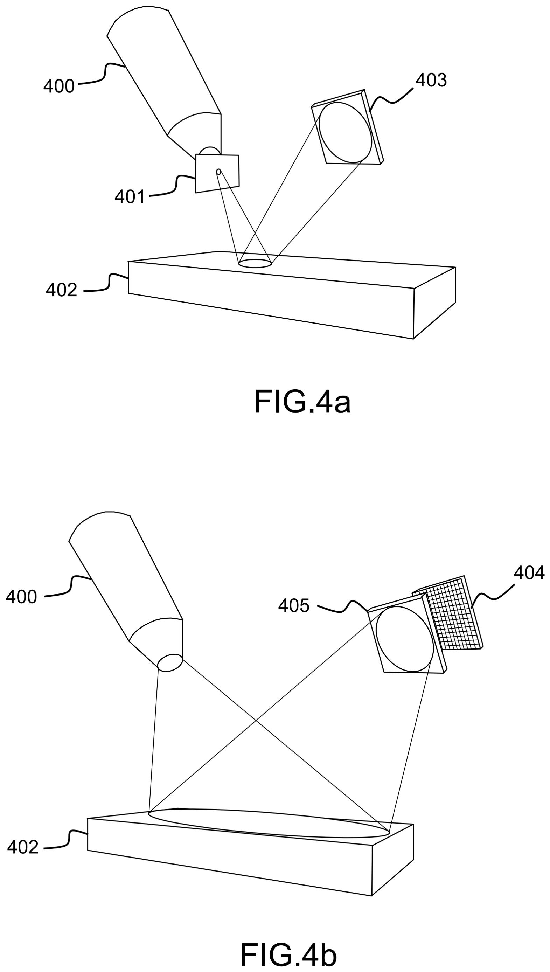

Une première approche illustrée à la figure 4a consiste à utiliser une source de rayons X 400 couplée à un collimateur 401 de sorte à n'irradier qu'une partie de l'échantillon d'intérêt 402 tout en collectant le signal de fluorescence rayonné par l'échantillon 402 via un détecteur non pixellisé 403. En répétant les mesures en balayant l'ensemble de l'échantillon 402, on obtient une image de l'échantillon, chaque mesure correspondant à un point de l'image.

Une seconde approche illustrée à la figure 4b consiste à irradier l'ensemble de l'échantillon 402 sans collimateur. Dans ce cas, l'imagerie est rendue possible par l'association d'un détecteur pixellisé 404 couplé à un collimateur 405 adapté qui fournit l'information d'énergie de position des sources de fluorescence émanant de l'échantillon 402.

Quelle que soit la méthode de mesure choisie pour reconstruire l'image associée à un élément chimique particulier, seules les interactions dont l'énergie correspondant aux raies de fluorescence X de l'élément en question sont conservées.

Un problème apparaît lorsque la différence d'énergie entre les raies de fluorescence X de deux éléments chimiques distincts est inférieure à la résolution en énergie du détecteur. Dans un tel cas de figure, les raies associées à chacun des deux éléments chimiques se superposent dans le spectre mesuré ce qui rend complexe voire impossible la discrimination des photons dont l'énergie se trouve dans cette zone de recouvrement. Ainsi, il n'est pas possible d'isoler spatialement deux éléments chimiques différents présents dans le même échantillon si leurs raies de fluorescence X se superposent.

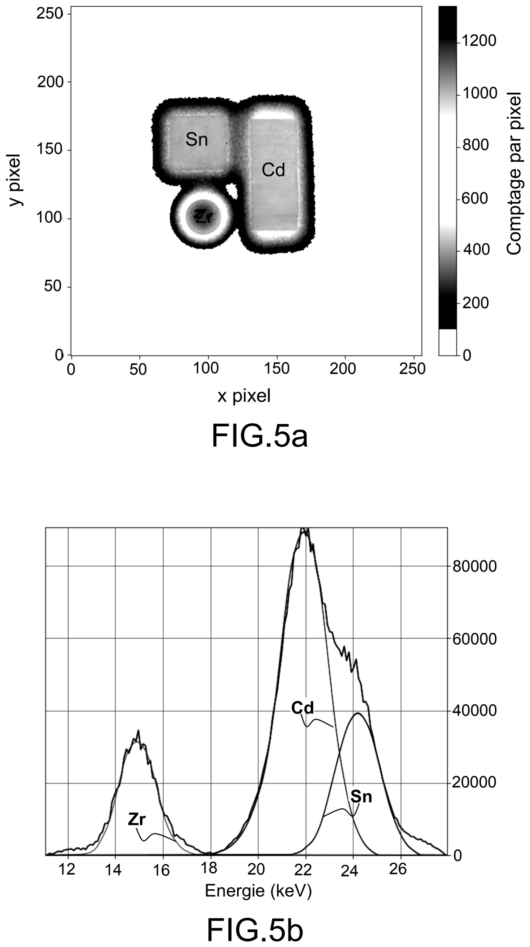

Cette situation est illustrée sur l'exemple des figures 5a et 5b qui montrent des résultats de spectro-imagerie obtenus, selon une méthode de l'art antérieur du type décrit aux figures 4a et 4b.

Trois échantillons sont positionnés dans la zone à imager. Ces trois échantillons sont respectivement : un rond de zirconium, un rectangle de cadmium et un carré d'étain.

La figure 5a montre l'image de la zone dans laquelle on peut identifier les trois échantillons précités. La figure 5b montre le spectre en énergie obtenu avec identification des spectres élémentaires des trois éléments chimiques.

Lorsque l'on effectue de la spectro-imagerie en sélectionnant les interactions dont l'énergie correspond à chacune des raies de fluorescence, on parvient à localiser correctement l'échantillon de zirconium Zr. Cependant, pour le cadmium Cd et l'étain Sn, le chevauchement de leurs signatures spectrales rend impossible la distinction des photons émis par ces deux éléments uniquement sur la base de leur énergie. Par conséquent, il est impossible de séparer spatialement ces deux échantillons en utilisant les bandes d'énergie associées à leur rayonnement de fluorescence X.

Ainsi, cette méthode d'imagerie présente le même inconvénient que la spectro-imagerie à masque codé appliquée à la détection de rayonnements ionisants de sources radioactives : elle ne permet pas de localiser précisément des éléments chimiques dont les raies de fluorescence X se superposent au moins partiellement dans les mêmes bandes d'énergie.

D'autres méthodes d'identification de la composition chimique d'un cordon de fabrication additive métallique sont notamment basées sur la spectrométrie d'émission atomique de plasma induit par laser ou LIBS (« Laser Induced Breakdown Spectroscopy »).

Dans le domaine de la spectrométrie de fluorescence X, la demande de brevet française FR3114398 décrit par ailleurs une méthode d'analyse par spectroscopie de rayons X à dispersion d'énergie d'une espèce chimique dans un bain de fusion ou un cordon solidifié par un procédé de fabrication additive.

L'invention vise à remédier aux limitations des méthodes de l'état de l'art précitées et repose sur une nouvelle approche exploitant les méthodes d'identification en imagerie hyperspectrale pour résoudre les ambiguïtés de localisation et identification de sources de rayonnement mesurées au moyen d'un spectro-imageur. L'invention s'applique de façon similaire pour identifier des rayonnements ionisants à l'aide d'un spectro-imageur à masque codé ou pour identifier des éléments chimiques dans un échantillon à l'aide d'une technique de spectro-imagerie par fluorescence X.

L'invention a pour objet une méthode d'identification de rayonnements ionisants comprenant les étapes de :
- Recevoir un ensemble de données acquises par un dispositif spectro-imageur pour une scène donnée, comprenant, pour chaque interaction d'un rayonnement mesurée par le dispositif spectro-imageur, la position de l'interaction et son énergie déposée,
- Construire, à partir dudit ensemble de données, un hypercube à deux dimensions spatiales et une dimension correspondant à l'énergie du rayonnement mesuré,
- Recevoir plusieurs spectres de référence en énergie associés chacun à un type de rayonnement de référence et,
- Pour chaque spectre de référence, déterminer au moins une position dans l'hypercube dont le spectre en énergie est le plus proche du spectre de référence selon un critère de similarité prédéfini.

Selon un aspect particulier de l'invention, ledit ensemble de données est mesuré au moyen d'un dispositif spectro-imageur à masque codé.

Selon un aspect particulier de l'invention, les spectres de référence sont déterminés a priori pour un ensemble prédéfini de rayonnements ionisants de référence, par mesure ou simulation.

Selon un aspect particulier de l'invention, les spectres de référence sont déterminés en recherchant automatiquement dans l'hypercube un nombre prédéfini de spectres en énergie correspondant à différents radionucléides.

Dans une variante de réalisation, la méthode comprend une étape de calcul d'un score de similarité entre chaque pixel de l'hypercube et chaque spectre de référence de manière à déterminer une carte de score de similarité pour chaque spectre de référence.

Dans une variante de réalisation, la méthode comprend une étape de génération d'une carte de localisation de chaque rayonnement ionisant associé à un spectre de référence en appliquant au moins un seuil de détection à la carte de score de similarité.

Dans une variante de réalisation, la méthode comprend la superposition de la carte de localisation à une image de la scène.

Selon un aspect particulier de l'invention, les rayonnements ionisants sont des rayonnements X ou Gamma.

Selon un aspect particulier de l'invention, les rayonnements ionisants sont des rayonnements de fluorescence X.

Selon un aspect particulier de l'invention, les rayonnements de fluorescence X sont issus de l'illumination d'un échantillon au moyen d'un générateur à rayons X.

Selon un aspect particulier de l'invention, chaque type de rayonnement de référence correspond à un élément chimique présent dans l'échantillon.

L'invention a aussi pour objet un système d'identification de rayonnements ionisants comprenant un dispositif spectro-imageur et une unité de traitement configurée pour exécuter les étapes de la méthode selon l'invention.

Selon un aspect particulier de l'invention, le système selon l'invention comprend en outre un générateur à rayons X, le système étant configuré pour exécuter les étapes de la méthode selon l'invention.

L'invention a aussi pour objet un programme d'ordinateur comprenant des instructions qui conduisent le système selon l'invention à exécuter les étapes de la méthode selon l'invention.

D'autres caractéristiques et avantages de la présente invention apparaîtront mieux à la lecture de la description qui suit en relation aux dessins annexés suivants.
[Fig. 1a] représente un schéma simplifié du fonctionnement d'un spectro-imageur à masque codé,
[Fig. 1b] représente un exemple de résultats obtenus par un spectro-imageur à masque codé,
[Fig. 2] représente un diagramme de spectre en énergie pour trois configurations de positionnement et nature de sources rayonnantes,
[Fig. 3] représente le diagramme de spectre en énergie mesuré pour deux sources ¹³⁷Cs et ⁶⁰Co,
[Fig. 4a] représente un schéma simplifié d'un premier type de spectro-imageur par fluorescence X,
[Fig. 4b] représente un schéma simplifié d'un second type de spectro-imageur par fluorescence X,
[Fig. 5a] représente un exemple d'image obtenue au moyen d'un spectro-imageur par fluorescence X,
[Fig. 5b] représente un exemple de spectre en énergie associé à l'image de la figure 5a,
[Fig. 6] représente un organigramme détaillant les étapes de mise en œuvre d'une méthode d'identification de sources rayonnantes selon un mode de réalisation de l'invention,
[Fig. 7a] représente un premier exemple d'image brute et d'image décodée pour un premier canal en énergie,
[Fig. 7b] représente un deuxième exemple d'image brute et d'image décodée pour un deuxième canal en énergie,
[Fig. 7c] représente un troisième exemple d'image brute et d'image décodée pour un troisième canal en énergie,
[Fig. 7d] représente un quatrième exemple d'image brute et d'image décodée pour un quatrième canal en énergie,
[Fig. 8] représente un exemple de scène dans laquelle sont localisées quatre radioéléments différents ²⁴¹Am, ¹³³Ba, ¹³⁷Cs, ⁶⁰Co,
[Fig. 9a] représente le spectre reconstruit de la source ²⁴¹Am via l'invention,
[Fig. 9b] représente la localisation de la source ²⁴¹Am obtenue via l'invention,
[Fig. 10a] représente le spectre reconstruit de la source ¹³³Ba via l'invention,
[Fig. 10b] représente la localisation de la source ¹³³Ba obtenue via l'invention,
[Fig. 11a] représente le spectre reconstruit de la source ¹³⁷Cs via l'invention,
[Fig. 11b] représente la localisation de la source ¹³⁷Cs obtenue via l'invention,
[Fig. 12a] représente le spectre reconstruit de la source ⁶⁰Co via l'invention,
[Fig. 12b] représente la localisation de la source ⁶⁰Co obtenue via l'invention,
[Fig. 13] représente un exemple de spectres de référence correspondant à des raies de fluorescence X pour les éléments chimiques respectifs du Zirconium, du Cadmium et de l'Etain,
[Fig. 14] représente plusieurs exemples de cartes de score d'éléments chimiques obtenues via l'invention,
[Fig. 15] représente les cartes de localisation obtenues à partir des cartes de score de la figure 14.

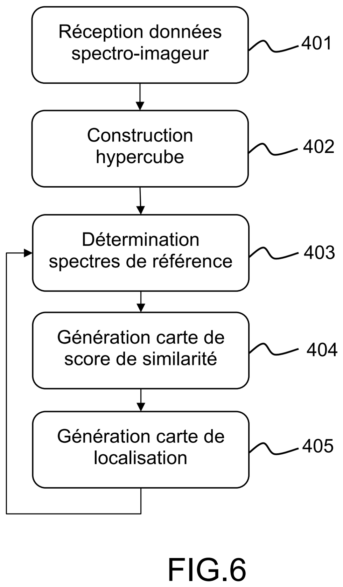

La figure 6 représente un organigramme d'une méthode d'identification de rayonnements ionisants selon un mode de réalisation de l'invention.

On décrit dans un premier temps un mode de réalisation de l'invention qui concerne l'identification de rayonnements ionisants Gamma ou X et qui s'étend à tout type de rayonnement ionisant, notamment les neutrons thermiques ou neutrons rapides.

La méthode débute à l'étape 601 avec la réception de données d'entrée mesurées par un dispositif spectro-imageur couplé à un collimateur de type masque codé. Le dispositif comprend en outre un détecteur pixellisé ou une matrice pixellisée tel qu'explicité aux figures 1a et 1b. Les types de collimateur utilisés peuvent être divers, il peut s'agir de masques codés mono-trou, à codage spatial aléatoire ou temporel. La référence [3] décrit plusieurs types de collimateurs compatibles de l'invention.

Plus précisément, les données d'entrée peuvent être organisées sous la forme d'un fichier ou d'un tableau dans lequel chaque ligne correspond à une interaction mesurée par le détecteur du spectro-imageur et comprend au moins la position de l'interaction et l'énergie déposée.

A l'étape 602, on construit, à partir des données d'entrée, un hypercube de la manière suivante. La bande totale d'énergie considérée est décomposée en canaux de largeur prédéfinie. Pour chaque canal d'énergie, on génère une carte ou image 2D qui contient la projection du masque codé à l'énergie considérée. Cette projection est appelée image brute ou « shadowgram » en anglais. Elle correspond aux images IB₁, IB₂ illustrées à la figure 1b, à la différence qu'elles sont déterminées en sélectionnant uniquement les positions des interactions associées à une énergie déposée dans le canal d'énergie considéré. Par exemple, pour un canal en énergie d'intérêt compris entre 10keV et 15keV, uniquement les interactions contribuant à ce canal en énergie sont intégrées à l'image brute. Cette opération est répétée pour chaque canal en énergie.

Ensuite, les images brutes sont décodées pour obtenir autant d'images décodées via un algorithme de décodage du type décrit précédemment à l'appui de la figure 1b.

Par exemple, une image décodée est calculée à l'aide d'une convolution ou d'une corrélation avec la réponse impulsionnelle spatiale (ou Point Spread Function (PSF) en anglais) correspondant au motif du masque codé utilisé.

Une image décodée est calculée pour chacun des canaux en énergie afin de balayer toute la gamme d'énergie d'intérêt.

A titre d'exemple, si la gamme d'énergie d'intérêt s'étend de 15 keV à 1,5 MeV avec un pas en énergie de 0,5 keV, et que les cartographies 2D se composent de 256×256 pixels, alors les dimensions de l'hypercube associées seront de 2971×256×256.

Sans sortir du cadre de l'invention, d'autres algorithmes de reconstruction peuvent être envisagés pour générer les images décodées, tels que des algorithmes itératifs ou à base d'intelligence artificielle, par exemple décrits dans la référence [4].

Les dimensions de chacune des cartographies 2D de la radioactivité sont dépendantes du système de mesure considéré.

Ainsi, chaque image 2D de l'hypercube donne pour chaque pixel, le nombre de coups mesurés correspondant à une interaction, pour le canal d'énergie considéré.

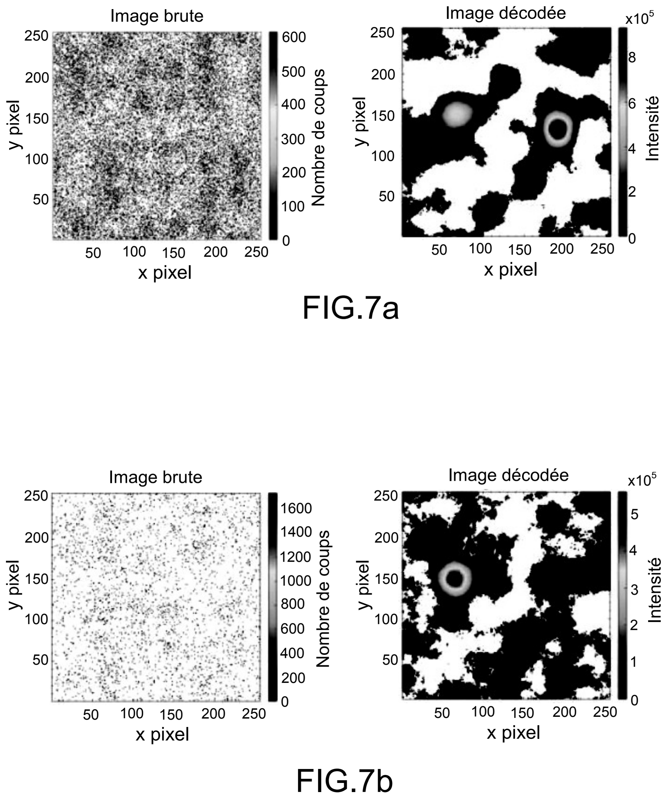

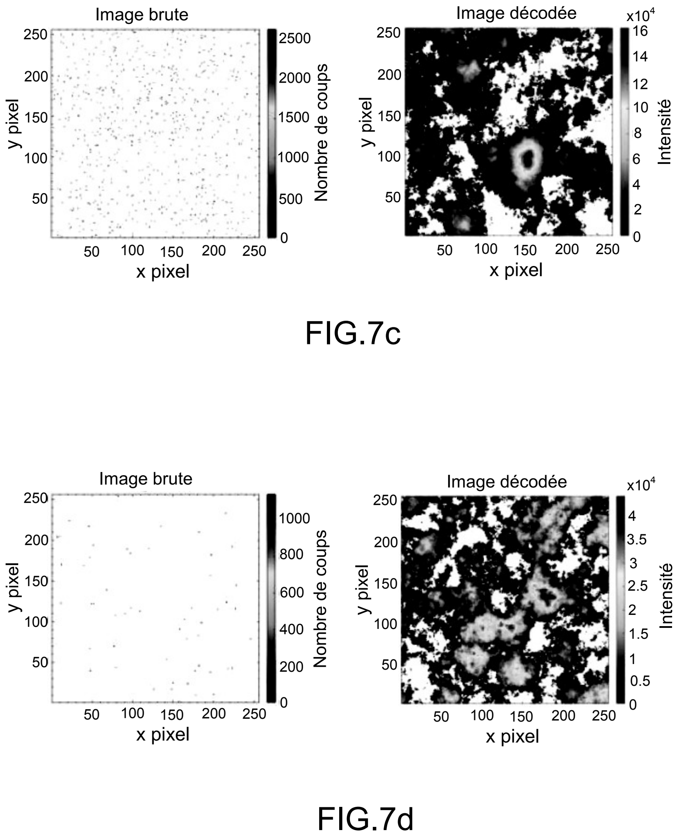

Les figures 7a à 7d représentent quatre exemples d'images brute et image décodée pour quatre canaux en énergie [45 kev 50 keV], [340 keV 345 keV], [645 keV 650 keV], [1130 keV 1135 keV].

A l'étape 603 de la méthode, on détermine un ou plusieurs spectres de référence correspondants à des radionucléides ou plus généralement à des sources rayonnantes données. Les spectres de référence correspondent aux éléments de référence que l'on souhaite localiser et identifier dans une scène ultérieure.

Selon une première variante de réalisation, les spectres de référence sont déterminés par mesures expérimentales préalables, par exemple à l'aide d'un spectro-imageur ou plus simplement d'un dispositif apte à mesurer le spectre en énergie d'une source de rayonnement de référence.

Selon une deuxième variante de réalisation, les spectres de référence sont déterminés par simulation numérique, par exemple à l'aide de codes de calcul Monte-Carlo.

Selon une troisième variante de réalisation, les spectres de référence sont directement déterminés par analyse de l'hypercube généré à l'étape 602 en appliquant un algorithme de recherche des signatures spectrales des éléments contenus dans l'hypercube. Ces signatures spectrales sont encore appelées « endmembers » en anglais.

Des exemples d'algorithmes possibles sont l'algorithme N-FINDR décrit dans la référence [5], ou un algorithme d'extraction de l'indice de pureté des pixels (ou « pixel purity index » en anglais) décrit dans les références [6] ou [7].

Dans cette troisième variante, les radioéléments de référence ne sont pas connus a priori mais sont déterminés a posteriori une fois les spectres de référence générés. En effet, en fonction de l'allure du spectre de référence, il est possible de retrouver le radioélément correspondant qui a une signature spectrale unique.

Les étapes suivantes 604,605 visent à générer une carte de localisation de même dimension que l'image et qui identifie les pixels dont les spectres sont les plus proches du spectre de référence donnant ainsi la localisation et l'identification de la source de rayonnement associée au spectre de référence.

Selon un mode de réalisation de l'étape 604, on génère une carte de score de similarité entre l'hypercube et chaque spectre de référence.

L'objectif de cette étape est de déterminer un score pour les différents pixels composant l'hypercube et de calculer une carte de score représentative de la similarité des spectres en énergie de chacun des pixels avec les spectres en énergie de référence.

Différents algorithmes existants permettent de calculer une similarité spectrale entre les pixels composant un hypercube, par exemple l'algorithme décrit dans la référence [8] ou l'algorithme SIDSAM de l'anglais « Spectral Information Divergence-Spectral Angle Mapper », décrit dans la référence [9]. L'application de l'algorithme SIDSAM aux données de l'hypercube a pour résultat une cartographie de score en 2D contenant la valeur de l'algorithme pour chacun des pixels.

La carte de score générée comporte, pour chaque pixel de l'image, une valeur de score de similarité entre le spectre de référence et le spectre correspondant à ce pixel dans l'hypercube.

Selon un mode de réalisation de l'étape 605, on génère ensuite une carte de localisation qui indique la localisation de la source de rayonnement correspondant au spectre de référence.

Les algorithmes de similarité spectrale utilisés à l'étape 604 fournissent une valeur qui quantifie à quel point deux spectres sont identiques. Par exemple, plus le score est proche de zéro, plus les deux spectres en énergies comparés sont proches. Ainsi, sur la cartographie de score obtenue qui décrit ce résultat, plus la valeur pour un pixel est proche de zéro, plus son spectre sera similaire au spectre de référence.

Les réponses spectrales de chacun des pixels étant régis par la statistique de Poisson ainsi que la réponse propre de chacun des pixels du système, il est nécessaire d'appliquer un seuil à cette cartographie pour mettre en évidence la position de la source radioactive recherchée. Tous les pixels de la carte de score qui ont une valeur de score inférieure à ce seuil sont considérés comme ayant un spectre en énergie similaire au spectre de référence considéré, et par conséquent appartiennent à la source radioactive recherchée. Les pixels ainsi mis en valeur correspondent à la position du point chaud radioactif associé au spectre de référence.

La valeur du seuil est par exemple fixée à 50 % à partir d'un critère visuel ou déterminé de manière automatique.

Les étapes 604,605 sont itérées pour chaque spectre de référence.

En variante, d'autres types de scores de similarité peuvent être envisagés pour lesquels à l'inverse, plus le score est élevé, plus la similarité entre les deux spectres est importante. Dans ce cas, les pixels d'intérêts dans la carte de localisation sont ceux qui ont une valeur de score supérieure à un seuil donné.

Dans une étape optionnelle, les cartes de localisation obtenues à l'étape 405 sont superposées à une image visible de la même scène afin d'aider l'utilisateur à localiser les sources radioactives.

On décrit à présent un exemple de résultats obtenus via la méthode selon l'invention.

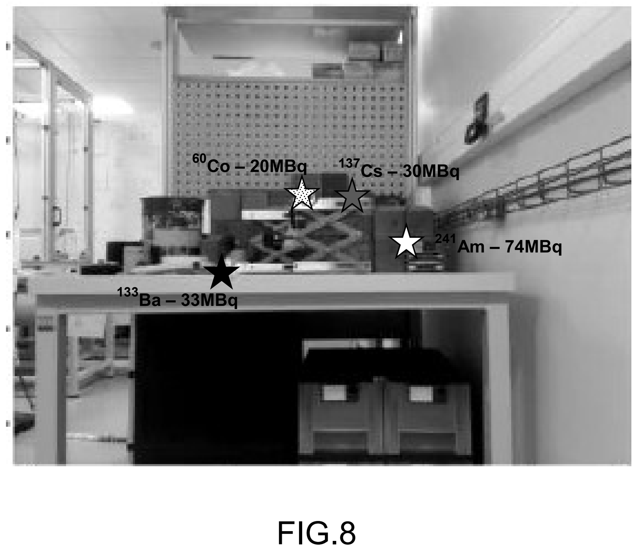

La figure 8 représente une image d'une scène dans laquelle quatre radioéléments ²⁴¹Am, ¹³³Ba, ¹³⁷Cs, ⁶⁰Co sont localisés.

Des mesures sont réalisées dans cet environnement à l'aide d'un spectro-imageur et la méthode selon l'invention est appliquée aux données mesurées.

Dans cet exemple, les spectres de référence sont déterminés expérimentalement.

Le tableau suivant donne les valeurs en énergies des raies spectrales caractéristiques des spectres de référence pour chaque radioélément.

| **Radionucléide** | **Raies en énergies [keV]** |
|---|---|
| ²⁴¹Am | 59,5 |
| ¹³³Ba | 81,0 - 302,9 - 356,0 |
| ¹³⁷Cs | 661,7 |
| ⁶⁰Co | 1173,2 - 1332,5 |

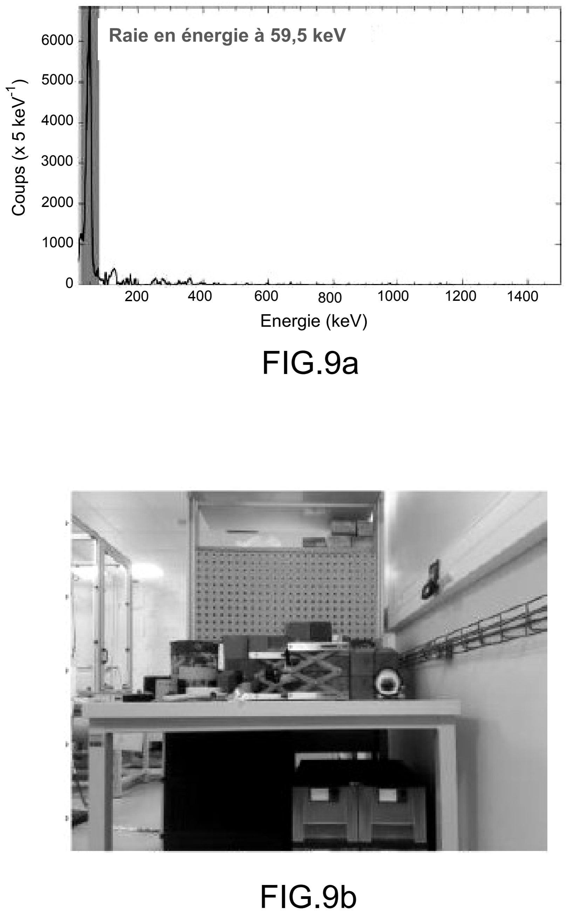

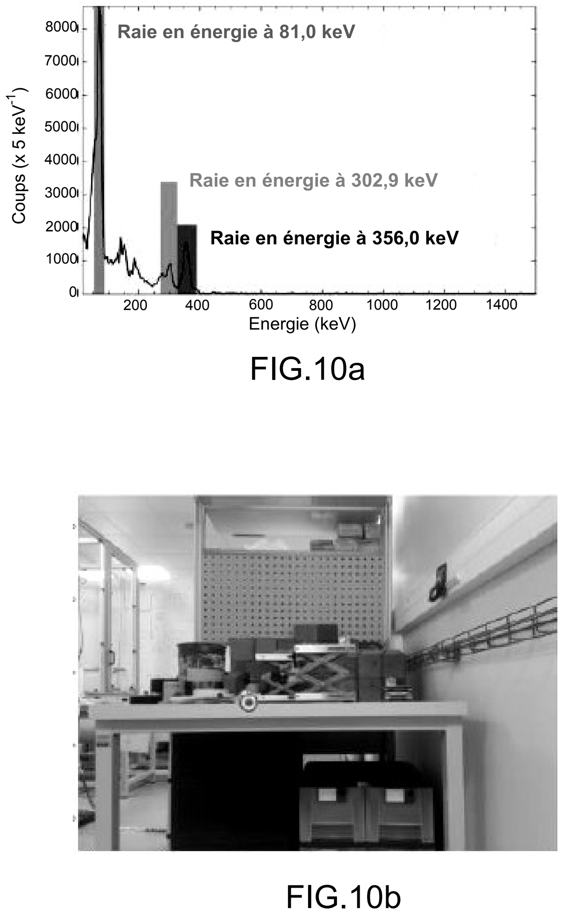

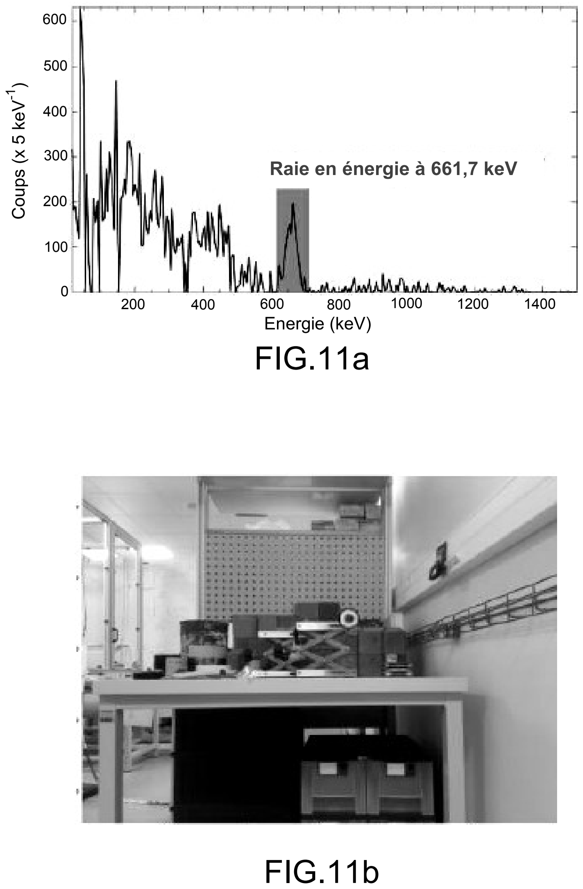

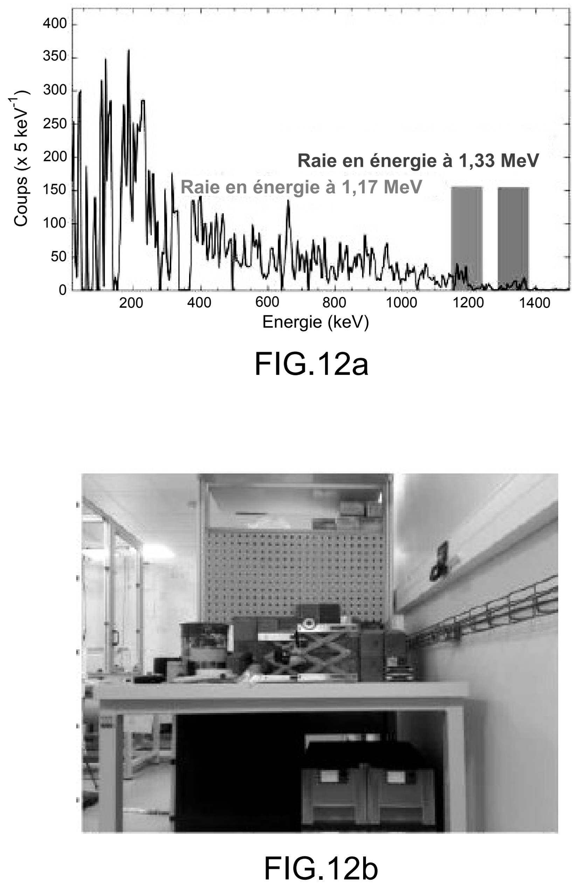

Les figures 9a, 10a, 11a, 12a représentent respectivement les spectres en énergie de chaque point chaud localisé grâce à l'invention avec les raies d'énergie d'intérêt mises en évidence.

Les figures 9b, 10b, 11b, 12b représentent les images superposées aux cartes de localisation obtenues pour les quatre éléments de références.

Chacun des radionucléides est reconstruit à sa position attendue, validant les possibilités de localisation de différents radionucléides via la méthode selon l'invention.

D'autre part, chacun des spectres en énergie des points chauds reconstruits présentent les caractéristiques attendues et permettent à un homme du métier d'identifier le radionucléide mis en évidence. Il est important de noter qu'il n'est a priori pas nécessaire d'afficher le spectre en énergie du point chaud reconstruit lorsque les spectres en énergie de référence sont ceux mesurés expérimentalement, cependant dans le cadre de l'industrie nucléaire une confirmation est préférable.

Des résultats similaires sont obtenus en déterminant les spectres de références en analysant l'hypercube sans connaissance a priori des éléments à rechercher.

On décrit à présent un autre mode de réalisation de l'invention qui met en œuvre le même procédé décrit à la figure 6 mais cette fois pour une application de spectro-imagerie à fluorescence X.

Dans ce mode de réalisation, le dispositif spectro-imageur utilisé est du type décrit aux figures 4a ou 4b. Les données d'entrée reçues à la figure 6 peuvent être organisées sous la forme d'un fichier ou d'un tableau dans lequel chaque ligne correspond à une interaction mesurée par le détecteur du spectro-imageur et comprend au moins la position de l'interaction et l'énergie déposée. Les données reçues peuvent être directement sous forme matricielle, chaque pixel de la matrice collectant le rayonnement de fluorescence émis par une zone donnée de l'échantillon.

Les données peuvent être mesurées via différentes méthodes. Dans le cas du dispositif de la figure 4a, les mesures sont réalisées en scannant l'échantillon 402 à l'aide du générateur de rayons X 400 couplé au collimateur 401. Dans ce cas, le rayonnement de fluorescence associé à chaque pixel est collecté successivement, chaque pixel correspondant à une position différente du générateur 400 vis-à-vis de l'échantillon 402.

Dans le cas du dispositif de la figure 4b, le détecteur pixellisé 404 mesure directement l'information d'énergie de position des photons détectés ce qui permet de collecter simultanément les données de tous les pixels.

La méthode décrite à la figure 6 est ensuite appliquée à l'identique.

En particulier, l'étape 602 consiste à construire un hypercube à partir des données mesurées. Pour cela, on rassemble toutes les interactions qui ont lieu dans un même pixel et à partir de ces interactions on reconstruit les spectres en énergie associés à chacun des pixels.

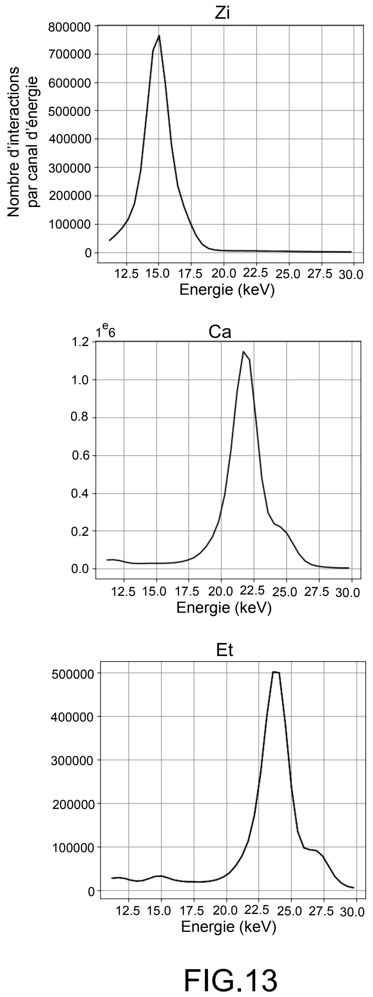

A l'étape 603, on détermine un ou plusieurs spectres de référence correspondant à des éléments chimiques que l'on souhaite rechercher dans un échantillon. La figure 13 présente trois exemples de spectres de référence obtenus de façon expérimentale pour le zirconium (Zi), le cadmium (Ca) et l'étain (Et). Ces spectres de référence sont obtenus dans les mêmes conditions de mesure que décrites précédemment.

En particulier, l'étape 603 peut consister en des mesures expérimentales, des simulations numériques ou une analyse de l'hypercube généré à l'étape 602 comme cela a été décrit plus haut en référence à la figure 6.

Plus précisément les spectres de référence correspondent à des rayonnements ionisants de fluorescence X émis par différents éléments chimiques.

A l'étape 604, on génère une carte de score de similarité entre l'hypercube et chaque spectre de référence. Cette étape peut être réalisée au moyen des algorithmes décrits dans les références [8] ou [9] ou encore au moyen d'un algorithme de démélange spectral tel que celui décrit dans la référence [10].

A l'étape 605 on génère ensuite une carte de localisation qui indique la localisation de l'élément chimique correspondant au spectre de référence.

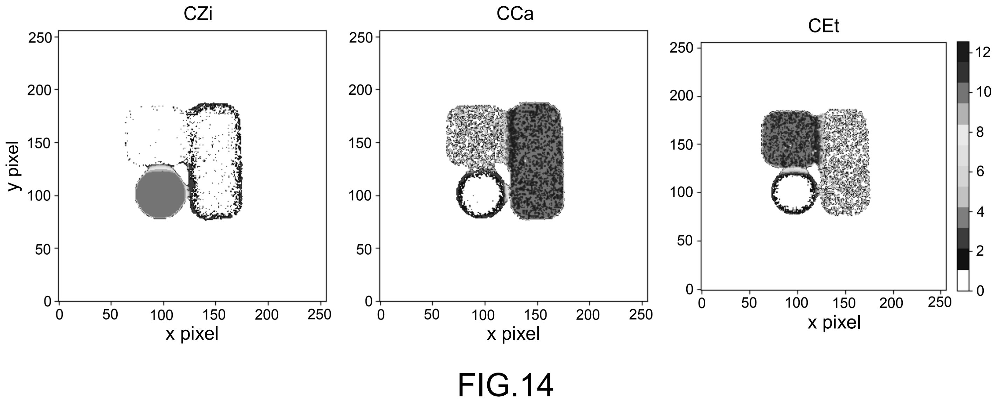

La figure 14 montre un exemple de trois cartes de scores respectivement associés aux trois spectres de référence de la figure 13 du Zirconium, du Cadmium et de l'Etain. L'imagerie concerne le même échantillon que celui présenté à la figure 5a composé d'un rond de zirconium, d'un rectangle de cadmium et d'un carré d'étain.

Les trois cartes CZi, CCa et Cet montrent respectivement, pour chaque pixel, un coefficient de contribution de chaque spectre de référence. Ainsi, une valeur élevée indique une forte probabilité de présence de l'élément chimique correspondant.

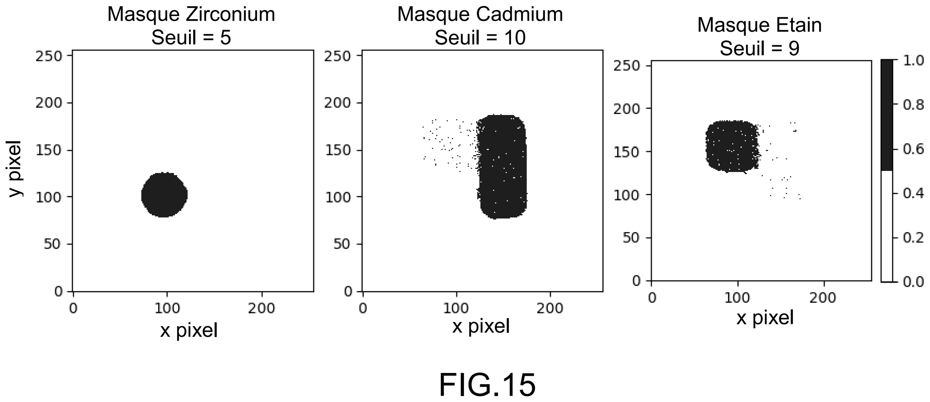

En appliquant une technique de seuillage à ces cartes de score on obtient trois cartes de localisation des éléments chimiques recherchés qui sont représentées à la figure 15.

Les seuils sont choisis expérimentalement et peuvent être différents selon les éléments chimiques.

Les cartes de localisation peuvent être fournies en entrée d'un algorithme de tri de composants.

L'invention permet ainsi une meilleure capacité de discrimination spatiale des différents éléments chimiques en comparaison avec l'état de l'art.

Dans une variante de réalisation, les cartes de localisation peuvent être complétées avec une information de taux de comptage d'interactions par pixel de sorte à obtenir une représentation plus précise de la situation visualisée.

L'invention peut être mise en œuvre au moyen d'un spectro-imageur comprenant un détecteur pixellisé et un collimateur ainsi qu'une unité de traitement pour exécuter l'invention à partir des données mesurées.

Le système selon l'invention peut également comprendre une interface d'affichage pour afficher les cartes de localisation superposées à l'image de la scène et en option les spectres des points chauds reconstruits.

### Références

[1] E.E. Fenimore, T.M. Cannon, Coded aperture imaging with uniformly redundant arrays, Appl. Opt. 17 (1978) 337-347.
[2] G. Amoyal, V. Schoepff, F. Carrel, M. Michel, N. Blanc de Lanaute, J.C. Angélique, Development of a hybrid gamma camera based on Timepix3 for nuclear industry applications, Nuclear Instruments and Methods in Physics Research Section A: Accelerators, Spectrometers, Detectors and Associated Equipment 987 (2021) 164838.
[3] « Coded-aperture imaging systems: Past, present and future development a review » Michat J. Cieslak, Kelum A.A. Gamage, Robert Glover, 2016
[4] G. Daniel, O. Limousin, Extended sources reconstructions by means of coded mask aperture systems and deep learning algorithm, Nuclear Instruments and Methods in Physics Research Section A: Accelerators, Spectrometers, Detectors and Associated Equipment 1012 (2021) 165600.
[5] Michael E. Winter, N-FINDR: an algorithm for fast autonomous spectral end-member determination in hyperspectral data, in: 1999: pp. 266-275.
[6] J.W. Boardman, F.A. Kruse, R.O. Green, Mapping target signatures via partial unmixing of AVIRIS data, Summaries of the Fifth Annual JPL Airborne Earth Science Workshop. Volume 1: AVIRIS Workshop (1993).
[7] C.-I. Chang, A. Plaza, A fast iterative algorithm for implementation of pixel purity index, IEEE Geoscience and Remote Sensing Letters 3 (2006) 63-67
[8] V. Paura, V. Marcinkevičius, Benchmark for Hyperspectral Unmixing Algorithm Evaluation, Informatica 34 (2023) 285-315.
[9] Yingzi Du, Chein-I Chang, Hsuan Ren, Chein-Chi Chang, James O. Jensen, Francis M. D'Amico, New hyperspectral discrimination measure for spectral characterization, Optical Engineering 43 (2004) 1777-1786.
[10] H. Paradis, C. Bobin, J. Bobin, ... J. B.-A. R. 2020, "Spectral unmixing applied to fast identification of γ-emitting radionuclides using Nal (TI) detectors," Elsevier (n.d.).

## Revendications

1. Méthode d'identification de rayonnements ionisants comprenant les étapes de :
- Mesurer (601) un ensemble de données au moyen d'un dispositif spectro-imageur muni d'un collimateur pour une scène donnée, l'ensemble de données comprenant, pour chaque interaction d'un rayonnement mesurée par le dispositif spectro-imageur, la position de l'interaction et son énergie déposée,
- Construire (602), à partir dudit ensemble de données, un hypercube à deux dimensions spatiales et une dimension correspondant à l'énergie du rayonnement mesuré,
- Recevoir (603) plusieurs spectres de référence en énergie associés chacun à un type de rayonnement de référence et,
- Pour chaque spectre de référence, déterminer (604,605) au moins une position dans l'hypercube dont le spectre en énergie est le plus proche du spectre de référence selon un critère de similarité prédéfini.

2. Méthode d'identification de rayonnements ionisants selon la revendication 1 dans laquelle ledit ensemble de données est mesuré au moyen d'un dispositif spectro-imageur à masque codé.

3. Méthode d'identification de rayonnements ionisants selon l'une quelconque des revendications précédentes dans laquelle les spectres de référence sont déterminés (603) a priori pour un ensemble prédéfini de rayonnements ionisants de référence, par mesure ou simulation.

4. Méthode d'identification de rayonnements ionisants selon l'une quelconque des revendications 1 ou 2 dans laquelle les spectres de référence sont déterminés (603) en recherchant automatiquement dans l'hypercube un nombre prédéfini de spectres en énergie correspondant à différents rayonnements ionisants.

5. Méthode d'identification de rayonnements ionisants selon l'une quelconque des revendications précédentes comprenant une étape de calcul (604) d'un score de similarité entre chaque pixel de l'hypercube et chaque spectre de référence de manière à déterminer une carte de score de similarité pour chaque spectre de référence.

6. Méthode d'identification de rayonnements ionisants selon la revendication 5 comprenant une étape de génération (605) d'une carte de localisation de chaque rayonnement ionisant associé à un spectre de référence en appliquant au moins un seuil de détection à la carte de score de similarité.

7. Méthode d'identification de rayonnements ionisants selon la revendication 6 comprenant la superposition de la carte de localisation à une image de la scène.

8. Méthode d'identification de rayonnements ionisants selon l'une quelconque des revendications précédentes dans laquelle les rayonnements ionisants sont des rayonnements X ou Gamma.

9. Méthode d'identification de rayonnements ionisants selon l'une quelconque des revendications 1 à 7 dans laquelle les rayonnements ionisants sont des rayonnements de fluorescence X.

10. Méthode d'identification de rayonnements ionisants selon la revendication 9 dans laquelle les rayonnements de fluorescence X sont issus de l'illumination d'un échantillon au moyen d'un générateur à rayons X.

11. Méthode d'identification de rayonnements ionisants selon la revendication 10 dans laquelle chaque type de rayonnement de référence correspond à un élément chimique présent dans l'échantillon.

12. Système d'identification de rayonnements ionisants comprenant un dispositif spectro-imageur muni d'un collimateur et une unité de traitement configurée pour exécuter les étapes de la méthode selon l'une quelconque des revendications précédentes.

13. Système selon la revendication 12 comprenant en outre un générateur à rayons X, le système étant configuré pour exécuter les étapes de la méthode selon l'une quelconque des revendications 9 à 11.

14. Programme d'ordinateur comprenant des instructions qui conduisent le système selon l'une quelconque des revendications 12 ou 13 à exécuter les étapes de la méthode selon l'une quelconque des revendications 1 à 11.
